Europäisches Patentamt

European Patent Office

Office européen des brevets

(19)

(11) EP 0 850 883 A2

(12) DEMANDE DE BREVET EUROPEEN

(43) Date de publication:
01.07.1998 Bulletin 1998/27

(51) Int Cl.6: C03B 5/235, F23D 14/22,
F23D 14/32

(21) Numéro de dépôt: 97403024.9

(22) Date de dépôt: 12.12.1997

(84) Etats contractants désignés:
AT BE CH DE DK ES FI FR GB GR IE IT LI LU MC
NL PT SE

(30) Priorité: 26.12.1996 FR 9616050

(71) Demandeurs:
• L'AIR LIQUIDE, SOCIETE ANONYME POUR
L'ETUDE ET L'EXPLOITATION DES PROCEDES
GEORGES CLAUDE
75321 Paris Cédex 07 (FR)
• TEISAN KABUSHIKI KAISHA
Minato-ku Tokyo 105 (JP)

(72) Inventeurs:
• Bodelin, Pierre
92170 Vanves (FR)

• Oguro, Takashi
Tokyo 135 (JP)
• Nakano, Kazuyoshi
Tokyo 135 (JP)
• Recourt, Patrick
91460 Marcoussis (FR)
• Takaha, Toshi
Tokyo 135 (JP)
• Tanaka, Hiroyuki
Tokyo 135 (JP)

(74) Mandataire: Vesin, Jacques et al
L'AIR LIQUIDE, S.A.,
Service Propriété Industrielle,
75 quai d'Orsay
75321 Paris Cédex 07 (FR)

(54) **Procédé de fabrication de verre technique et brûleur pour la mise en oeuvre d'un tel procédé**

(57) L'invention concerne un procédé de fabrication de verre technique à l'aide d'une flamme non dure, de couleur bleue et ne comportant substantiellement aucune espèce réductrice. Elle concerne également un brûleur (1) pour la mise en oeuvre de ce procédé comportant trois conduits (3, 5, 7) coaxiaux d'amenée de gaz dans une zone (9) de combustion, à savoir un conduit central (3) d'amenée de comburant, un conduit annulaire intermédiaire (5) d'amenée de combustible et un conduit annulaire périphérique (7) d'amenée de comburant, le débit total de comburant $Q_O^{TOT}$ étant déterminé par la relation :

$$Q_O^{TOT} = (R^0 + \Delta R) Q_C$$

où $Q_C$ représente la consommation nominale de combustible du brûleur, $R^0$ est le rapport stoechiométrique entre le combustible et le comburant, et R est un excès stoechiométrique.

Les dimensions des trois conduits (3, 5, 7) satisfont, en vue de l'obtention d'une flamme bleue ayant une quantité de mouvement réduite, à des conditions particulières.

FIG.1

EP 0 850 883 A2

## Description

L'invention est relative à un brûleur pour combustibles gazeux, notamment le gaz naturel.

Dans la plupart des fours industriels, tels que par exemple les fours de verrerie, le transfert de chaleur à la charge par rayonnement joue un rôle prépondérant. Or, ce transfert de chaleur par rayonnement dépend d'une part du pouvoir émissif des produits de combustion et d'autre part de leur répartition spatiale.

Dans l'industrie verrière, on a constaté que la fabrication dans un four de certains verres tels que par exemple des verres techniques pour des affichages à cristaux liquides (« CCD »), dont l'épaisseur est environ 1mm, nécessite des propriétés bien particulières des flammes chauffant le four.

Parmi ces propriétés, on a constaté que d'une part, il était préférable d'avoir une flamme ne comprenant de préférence substantiellement aucune espèce réductrice telle que des particules de suie, et d'autre part, d'avoir une flamme dont le domaine d'émission est situé dans la plage des longueurs d'ondes comprises entre environ 2 $\mu$m et environ 5 $\mu$m, c'est à dire des flammes de couleur bleue.

Les flammes bleues remplissent ces deux conditions. Elles ne produisent pas de suie. Leur émission est en majorité dûe à d'une part, l'émission de la vapeur d'eau dont le domaine d'émission privilégié se situe entre 2,2 $\mu$m et 2,8 $\mu$m, et d'autre part, à l'émission du dioxyde de carbone dont le domaine d'émission se situe entre 2,8 $\mu$m et 3 $\mu$m ainsi qu'entre 4 $\mu$m et 5 $\mu$m.

Enfin, on a constaté que le transfert thermique d'une flamme peut être relié à la quantité de mouvement de celle-ci. Ainsi plus la quantité de mouvement d'une flamme est élevée, plus le transfert thermique de cette flamme se déplace longitudinalement vers l'aval.

Pour la fabrication des verres techniques précités, on a également constaté qu'il fallait une flamme à quantité de mouvement limitée (ou réduite), c'est à dire une flamme non dure et de préférence molle, afin de ne pas surchauffer les parois du four en matériau réfractaire situées en face du brûleur.

On connaît du brevet FR-A-1 441 671, au nom de la Demanderesse, un brûleur à flamme variable pour hydrocarbures gazeux, notamment le gaz naturel. Ce brûleur connu comporte plusieurs tubes disposés concentriquement de manière telle qu'ils forment respectivement un conduit central, un conduit annulaire intermédiaire et un conduit annulaire périphérique. Le conduit central et le conduit périphérique sont alimentés par un comburant et le conduit annulaire intermédiaire est alimenté par un combustible, ou inversement.

Bien que l'on ait pu régler la flamme de ce brûleur afin d'obtenir une flamme bleue, cette flamme est obtenue seulement avec des flammes ayant une quantité de mouvement élevée, c'est à dire des flammes dures.

La présente invention vise à améliorer le brûleur du type précité pour qu'il puisse réaliser une flamme "bleue" à quantité de mouvement réduite.

A cet effet, l'invention a pour objet un brûleur pour combustibles gazeux, notamment le gaz naturel, comportant trois conduits coaxiaux d'amenée de gaz dans une zone de combustion, à savoir un conduit central d'amenée de comburant, un conduit annulaire intermédiaire d'amenée de combustible, et un conduit annulaire périphérique d'amenée de comburant, le débit total de comburant $Q_O^{TOT}$ étant déterminé par la relation:

$$Q_O^{TOT} = (R^0 + \Delta R)\, Q_C$$

où $Q_C$ représente la consommation nominale de combustible du brûleur, $R^0$ est le rapport stoechiométrique entre le combustible et le comburant, et R est un excès stoechiométrique,
caractérisé en ce que les dimensions des trois conduits satisfont, en vue de l'obtention d'une flamme bleue ayant une quantité de mouvement réduite, les relations suivantes :

$$\text{(i)} \qquad 25\,(R^0 Q_C)^{1/2} \le D_1 \le 62\,(R^0 Q_C)^{1/2},$$

$$\text{(ii)} \qquad 113\,(Q_C)^{1/2} \le (D_3{}^2 - D_2{}^2)^{1/2} \le 291\,(Q_C)^{1/2},$$

$$\text{(iii)} \qquad 211\,(Q_O^{TOT})^{1/2} \le (D_5{}^2 - D_4{}^2)^{1/2} \le 479\,(Q_O^{TOT})^{1/2},$$

$$\text{(iv)} \qquad 1 \le \frac{D_2 - D_1}{D_1} \le 20$$

$$(v) \quad 1 \leq \frac{D_5 - D_4}{D_1} \leq 5,$$

relations dans lesquelles :

$D_1$ est le diamètre du conduit central,
$D_2$ est le diamètre interne du conduit annulaire intermédiaire,
$D_3$ est le diamètre externe du conduit annulaire intermédiaire,
$D_4$ est le diamètre interne du conduit annulaire périphérique,
$D_5$ est le diamètre externe du conduit annulaire périphérique, et

en ce que le conduit central comporte une extrémité de paroi évasée faisant un angle compris entre 20° et 45°, de préférence 40°, avec l'axe du brûleur.

L'invention peut comporter une ou plusieurs des caractéristiques suivantes :

- le conduit annulaire intermédiaire comporte une extrémité de paroi interne inclinée en direction de l'axe du brûleur et faisant avec cet axe un angle compris entre 5° et 30°, de préférence 25°,
- le conduit annulaire périphérique comporte une extrémité de paroi interne inclinée en direction de l'axe du brûleur et faisant avec cet axe un angle compris entre 5° et 30°, de préférence 25°,
- l'extrémité de sortie du conduit central est en retrait par rapport à l'extrémité de sortie du conduit annulaire périphérique d'une distance h, comprise entre 0 et 1,5 $D_1$, de préférence égale à $D_1$.

L'invention concerne également un procédé de fabrication de verre technique, tel que du verre pour les écrans des affichages à cristaux liquides, dans lequel on chauffe le bain de verre avec au moins une des flammes, procédé caractérisé en ce que au moins une des flammes est une flamme non dure, de couleur bleue, c'est à dire ayant un spectre d'émission essentiellement compris entre 2 μm et 5 μm et ne comportant substantiellement aucune espèce réductrice et notamment des suies.

D'autres caractéristiques et avantages de l'invention ressortiront de la description suivante donnée à titre d'exemple sans caractère limitatif, en regard des dessins annexées, sur lesquels :

La figure 1 est une vue en coupe partielle d'un brûleur suivant l'invention, et
La figure 2 est une vue en coupe d'un détail 11 du brûleur de la figure 1.

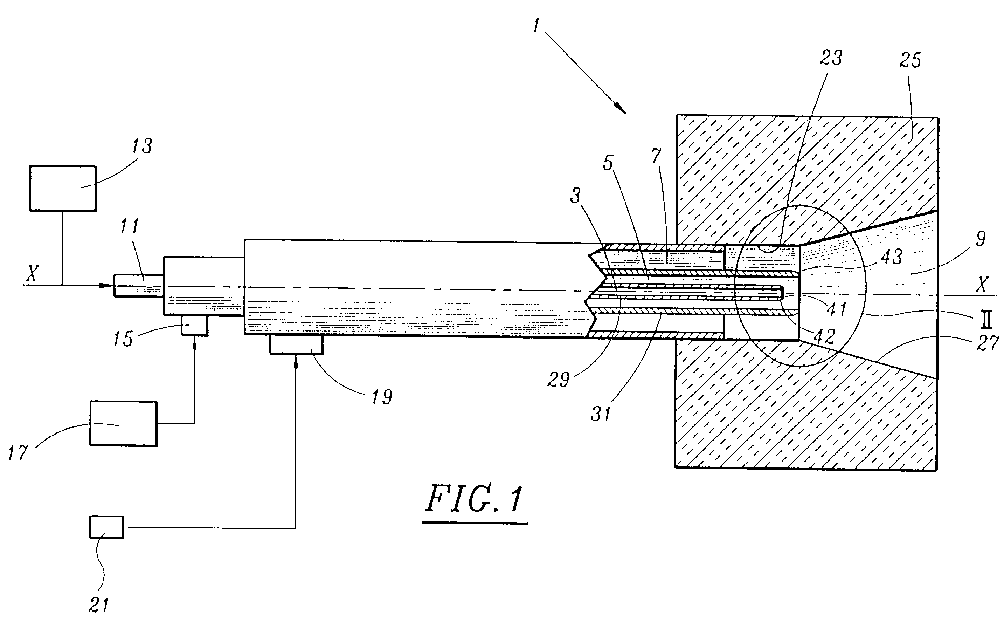

La figure 1 représente un brûleur 1 suivant l'invention. Ce brûleur 1 comprend trois conduits 3, 5 et 7 d'amenée de gaz dans une zone de combustion 9. Ces trois conduits 3, 5 et 7 sont disposés concentriquement autour d'un axe X-X du brûleur 1.

Le conduit 3 est relié par son extrémité 11 d'entrée de gaz à un organe 13 de régulation de débit d'un comburant tel que par exemple l'oxygène.

Le conduit annulaire intermédiaire 5 comprend une extrémité d'entrée 15 reliée à un organe 17 de régulation de débit d'un combustible, tel que par exemple le gaz naturel.

Le conduit annulaire périphérique 7 comporte une entrée 19 d'un comburant. Ce conduit 7 est alimenté par un organe 21 de régulation de débit en comburant tel que par exemple l'oxygène.

Comme on le voit sur la figure 1, le brûleur 1 est introduit dans un passage 23, appelé "ouvreau" dans l'industrie verrière, d'un bloc 25 en matériau réfractaire. Le passage 23 du bloc 25 débouche dans un passage 27 évasé qui s'ouvre en direction de la zone 9 de combustion.

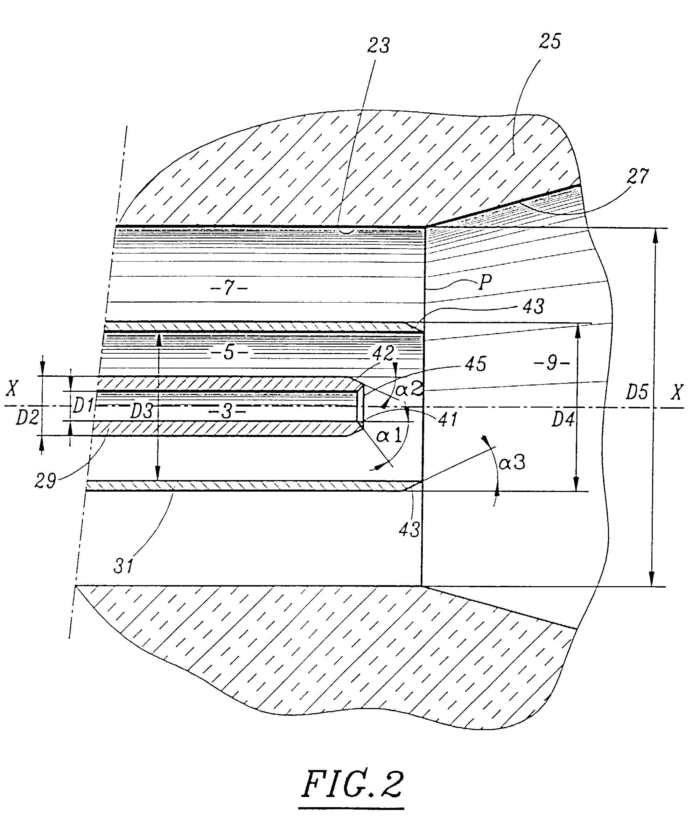

Comme on le voit sur les figures 1 et 2, les extrémités de sortie du brûleur sont formées d'une part par le passage 23 réalisé dans le bloc 25, et d'autre part par deux tubes, un tube central 29 et un tube intermédiaire 31, réalisés en acier réfractaire afin de résister à la chaleur développée par le processus de combustion.

Comme cela est indiqué sur la figure 2, le conduit central 3 possède un diamètre $D_1$. Le conduit annulaire intermédiaire 5 possède un diamètre interne $D_2$ et un diamètre externe $D_3$. Le conduit annulaire périphérique 7 possède un diamètre interne $D_4$ et un diamètre externe $D_5$.

Sans dilution par des gaz inertes, la production d'une flamme sans suie n'est possible qu'à condition de mélanger très rapidement et le plus homogènement possible le combustible et le comburant.

Pour atteindre ce but, et afin de réduire la quantité de mouvement nécessaire pour réaliser une flamme "bleue", les extrémités des tubes 29 et 31 sont usinées. Ainsi, le conduit central 3 comporte une extrémité de paroi 41 évasée faisant avec l'axe X-X du brûleur un angle 1 compris entre 20° et 45°, de préférence 40°. L'extrémité 42 de la paroi interne du conduit 5 est inclinée en direction de l'axe X-X du brûleur. Cette extrémité 42 fait avec l'axe X-X du brûleur un angle 2 compris entre 5° et 30°, de préférence 25°. L'extrémité 43 de paroi interne du conduit annulaire périphérique 7 est également inclinée en direction de l'axe X-X du brûleur. Cette extrémité 43 fait avec l'axe de brûleur un angle 3 compris entre 5° et 30°, de préférence 25°.

Par ailleurs, l'extrémité de sortie du conduit 7 annulaire périphérique est disposée dans un plan P défini par la jonction entre la paroi de l'ouvreau 23 et la paroi du passage évasé 27 du bloc 25 en matériau réfractaire. L'extrémité 45 du tube interne 29 définissant l'extrémité de sortie du conduit central 3, se trouve en retrait d'une distance $\underline{h}$ par rapport à ce plan P.

Le brûleur 1 est conçu pour une certaine puissance nominale à laquelle est associée une consommation nominale $Q_C$ de combustible du brûleur. C'est par rapport à ce débit nominal $Q_C$, que les différentes dimensions $D_1$ à $D_5$ du brûleur sont fixées.

Pour produire une flamme "bleue", il est nécessaire que l'apport en comburant soit supérieur ou égal à la quantité stoechiométrique nécessaire pour brûler tout le combustible apporté dans la zone de combustion. Le débit total de comburant $Q_O{}^{TOT}$ est alors déterminé par la relation :

$$Q_O{}^{TOT} = (R^0 + \Delta R) Q_C$$

où $R^0$ est le rapport stoechiométrique entre le combustible et le comburant et R est un excès stoechiométrique qui est défini à l'avance par l'application de fabrication de verre dans laquelle le brûleur est utilisé.

Afin de réaliser une flamme bleue ayant une quantité de mouvement réduite, la Demanderesse a déterminé par un calcul des relations suivantes entre les différentes dimensions $D_1$ à $D_5$ :

$$\text{(i)} \qquad 25 \, (R^0 Q_C)^{1/2} \leq D_1 \leq 62 \, (R^0 Q_C)^{1/2},$$

$$\text{(ii)} \qquad 113 \, (Q_C)^{1/2} \leq (D_3{}^2 - D_2{}^2)^{1/2} \leq 291 \, (Q_C)^{1/2},$$

$$\text{(iii)} \qquad 211 \, (Q_O{}^{TOT})^{1/2} \leq (D_5{}^2 - D_4{}^2)^{1/2} \leq 479 \, (Q_O{}^{TOT})^{1/2},$$

$$\text{(iv)} \qquad 1 \leq \frac{D_2 - D_1}{D_1} \leq 20$$

$$\text{(v)} \qquad 1 \leq \frac{D_5 - D_4}{D_1} \leq 5,$$

Ce brûleur fonctionne dans un environnement à très haute température (environ 1600 C) sans refroidissement autre que celui dû aux fluides combustibles et comburants. Avec ce brûleur, on obtient une flamme "bleue" de quantité de mouvement réduite qui est donc moins susceptible de surchauffer les parois en matériau réfractaire situées en face du brûleur.

## Revendications

1. Procédé de fabrication de verre technique et notamment de verre pour les écrans des affichages à cristaux liquides, dans lesquel on chauffe le bain de verre avec au moins une flamme , caractérisé en ce que l'une au moins des flammes est une flamme non dure, de couleur bleue et ne comportant substantiellement aucune espèce réductrice.

2. Procédé selon la revendication 1, caractérisé en ce que le spectre d'émission de la flamme bleue est essentiellement compris entre 2 µm et 5 µm.

3. Brûleur (1) pour combustibles gazeux, notamment le gaz naturel permettant la mise en oeuvre du procédé selon l'une des revendications 1 ou 2, comportant trois conduits (3, 5, 7) coaxiaux d'amenée de gaz dans une zone (9) de combustion, à savoir un conduit central (3) d'amenée de comburant, un conduit annulaire intermédiaire (5) d'amenée de combustible, et un conduit annulaire périphérique (7) d'amenée de comburant, le débit total de comburant $Q_O{}^{TOT}$ étant déterminé par la relation :

$$Q_O{}^{TOT} = (R^0 + \Delta R) Q_C$$

où $Q_C$ représente la consommation nominale de combustible du brûleur,
$R^0$ est le rapport stoechiométrique entre le combustible et le comburant, et
$R$ est un excès stoechiométrique,
caractérisé en ce que les dimensions des trois conduits (3, 5, 7) satisfont, en vue de l'obtention d'une flamme
bleue ayant une quantité de mouvement réduite, les relations suivantes :

$$\text{(i)} \qquad 25 \, (R^0 Q_C)^{1/2} \leq D_1 \leq 62 \, (R^0 Q_C)^{1/2},$$

$$\text{(ii)} \qquad 113 \, (Q_C)^{1/2} \leq (D_3{}^2 - D_2{}^2)^{1/2} \leq 291 \, (Q_C)^{1/2},$$

$$\text{(iii)} \qquad 211 \, (Q_O{}^{TOT})^{1/2} \leq (D_5{}^2 - D_4{}^2)^{1/2} \leq 479 \, (Q_O{}^{TOT})^{1/2},$$

$$\text{(iv)} \qquad 1 \leq \frac{D_2 - D_1}{D_1} \leq 20$$

$$\text{(v)} \qquad 1 \leq \frac{D_5 - D_4}{D_1} \leq 5,$$

et
où:

$D_1$ est le diamètre du conduit central,
$D_2$ est le diamètre interne du conduit annulaire intermédiaire,
$D_3$ est le diamètre externe du conduit annulaire intermédiaire,
$D_4$ est le diamètre interne du conduit annulaire périphérique,
$D_5$ est le diamètre externe du conduit annulaire périphérique,

et en ce que le conduit (3) central comporte une extrémité (41) de paroi évasée faisant un angle ($_1$) compris entre 20° et 45°, de préférence 40°, avec l'axe (X-X) du brûleur.

4.   Brûleur selon la revendication 3, caractérisé en ce que le conduit (5) annulaire intermédiaire comporte une extrémité (42) de paroi interne inclinée en direction de l'axe (X-X) du brûleur et faisant avec cet axe un angle ($_2$) compris entre 5° et 30°, de préférence 25°.

5.   Brûleur selon l'une des revendications 3 ou 4, caractérisé en ce que le conduit (7) annulaire périphérique comporte une extrémité (43) de paroi interne inclinée en direction de l'axe (X-X) du brûleur (1) et faisant avec cet axe un angle ($_3$) compris entre 5° et 30°, de préférence 25°.

6.   Brûleur selon l'une des revendications 3 à 5, caractérisé en ce que l'extrémité (45) de sortie du conduit central est en retrait par rapport a l'extrémité de sortie du conduit (7) annulaire périphérique, d'une distance h comprise entre 0 et $1,5 \times D_1$ de préférence égale à $D_1$.

*FIG.1*

*FIG.2*